# EUROPEAN PATENT APPLICATION

(11) **EP 4 437 919 A1**
(43) Date of publication of application: **02.10.2024**
(21) Application number: 24167184.1
(22) Date of filing: 28.03.2024
(51) Int. Cl.: A47J 43/06, A47J 43/07, G06F 3/01

(54) **KITCHEN APPLIANCE WITH ADAPTABLE USER INTERFACE WITH TACTILE FEEDBACK**

(30) Priority: 28.03.2023 US 202363455065 P; 27.03.2024 US 202418618376
(71) Applicant: Whirlpool Corporation, Benton Harbor, MI 49022 (US)
(72) Inventor: Bradley, Samuel J., Benton Harbor, 49022 (US); Leitert, Andrew John, Benton Harbor, 49022 (US); Shewale, Pravin R., Benton Harbor, 49022 (US)
(74) Representative: Eisenführ Speiser

(57) **Abstract**

A kitchen appliance (10) includes a body (12) defining an accessory connection surface (14) with a sensor (16). The kitchen appliance (10) further includes a first appliance accessory (18A) with a first readable module (20A) and a second appliance accessory (18B) with a second readable module (20B). A user interface (22) on the body (12) includes a visual display (24) and a plurality of buttons (26) under the visual display (24) that are biased towards a user to provide haptic feedback. A control system (100) is configured to receive a signal from the sensor (16) of the presence of the first readable module (20A) or the second readable module (20B) and identify which of the first appliance accessory (18A) and the second appliance accessory (18B) are attached to the accessory connection surface (14) by the signal. The control system (100) is further configured to generate a graphic on the visual display (24) specific to the identified appliance accessory (18A, 18B).

## Description

### FIELD OF THE DISCLOSURE

The present disclosure generally relates to a kitchen appliance, and, more specifically, to a kitchen appliance with an adaptable user interface.

### BACKGROUND

Food processing appliances typically include several complementary appliances or accessories for various types of food processing. The accessories are typically releasably connected to the food processing appliance. In this manner, various accessories may be connected to a single food processing appliance for a desired type of food processing. Generally, there is a motor or other driving arrangement that drives the accessories and, depending on the type of accessory, the motor may need to run at varying speeds or unique cycles. In this manner, switching between multiple accessories generally requires additional labor on the part of the user, to know and manually switch between types of cycles with a user interface having set inputs depending on what accessory is attached to the food processing appliance.

Accordingly, the present disclosure relates to a kitchen appliance with a sensor that can distinguish between multiple appliances and, in response, reconfigure a user interface of the kitchen appliance.

### SUMMARY OF THE DISCLOSURE

According to one aspect of the present disclosure, a kitchen appliance includes a body defining an accessory connection surface with a sensor. A first appliance accessory includes a first readable module and a second appliance accessory includes a second readable module. A user interface on the body includes a visual display and a plurality of buttons under the visual display that are biased towards a user to provide haptic feedback. A control system is configured to receive a signal from the sensor of the presence of the first readable module or the second readable module and identify which of the first appliance accessory and the second appliance accessory are attached to the accessory connection surface by the signal. The control system is further configured to generate a graphic on the visual display specific to the identified appliance accessory.

According to another aspect of the present disclosure, a kitchen appliance includes a body defining an accessory connection surface with a sensor. A first appliance accessory includes a first readable module and a second appliance accessory includes a second readable module. A user interface is located on the body and includes a plurality of buttons that are biased towards a user to provide haptic feedback. A visual display located over at least one of the buttons. A control system is configured to receive a signal from the sensor of the presence of the first readable module or the second readable module and identify which of the first appliance accessory and the second appliance accessory are attached to the accessory connection surface by the signal. The control system is further configured to generate a graphic on the visual display specific to the identified appliance accessory.

According to yet another aspect of the present disclosure, a kitchen appliance includes a body defining an accessory connection surface with a sensor. A first appliance accessory includes a first readable module and a second appliance accessory includes a second readable module. A toggle body is located on the body and pivotal between a non-active position and an articulated position associated with a user input. A user interface is located on the toggle body and includes a plurality of buttons that are biased towards a user to provide haptic feedback. A visual display located over at least one of the buttons. A control system is configured to receive a signal from the sensor of the presence of the first readable module or the second readable module and identify which of the first appliance accessory and the second appliance accessory are attached to the accessory connection surface by the signal. The control system is further configured to generate a graphic on the visual display specific to the identified appliance accessory.

These and other features, advantages, and objects of the present disclosure will be further understood and appreciated by those skilled in the art by reference to the following specification, claims, and appended drawings.

### BRIEF DESCRIPTION OF THE DRAWINGS

In the drawings:
FIG. 1 is a schematic view of a kitchen appliance according to one aspect of the present disclosure;
FIG. 2 is a top perspective view of a user interface of a kitchen appliance according to one aspect of the present disclosure;
FIG. 3A is a plan view of a visual display with a first generated graphic according to one aspect of the present disclosure;
FIG. 3B is a plan view of a visual display with a second generated graphic according to one aspect of the present disclosure;
FIG. 3C is a plan view of a visual display with a third generated graphic according to one aspect of the present disclosure;
FIG. 3D is a plan view of a visual display with a fourth generated graphic according to one aspect of the present disclosure;
FIG. 4A is a top perspective view of a portion of a user interface according to one aspect of the present disclosure;
FIG. 4B is a top perspective view of a user interface in a disassembled state according to one aspect of the present disclosure;
FIG. 4C is a side elevational view of a user interface according to one aspect of the present disclosure;
FIG. 5 is a schematic view of a control system for a kitchen appliance according to one aspect of the present disclosure; and
FIG. 6 is a flow chart illustrating a method of configuring a visual display on a user interface with haptic feedback.

The components in the figures are not necessarily to scale, emphasis instead being placed upon illustrating the principles described herein.

### DETAILED DESCRIPTION

The present illustrated embodiments reside primarily in combinations of method steps and apparatus components related to a kitchen appliance with an adaptable user interface. Accordingly, the apparatus components and method steps have been represented, where appropriate, by conventional symbols in the drawings, showing only those specific details that are pertinent to understanding the embodiments of the present disclosure so as not to obscure the disclosure with details that will be readily apparent to those of ordinary skill in the art having the benefit of the description herein. Further, like numerals in the description and drawings represent like elements.

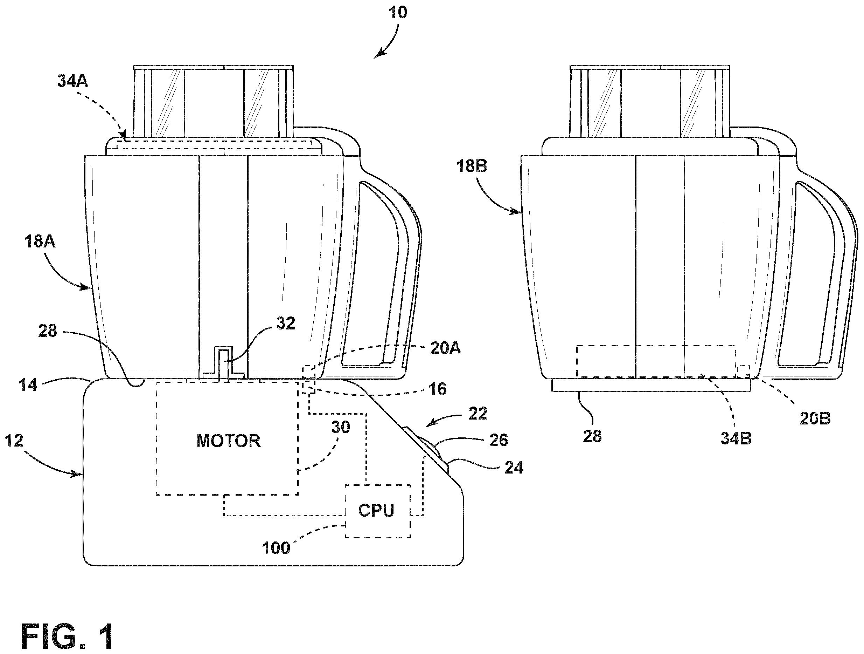

For purposes of description herein, the terms "upper," "lower," "right," "left," "rear," "front," "vertical," "horizontal," and derivatives thereof shall relate to the disclosure as oriented in FIG. 1. Unless stated otherwise, the term "front" shall refer to the surface of the element closer to an intended viewer, and the term "rear" shall refer to the surface of the element further from the intended viewer. However, it is to be understood that the disclosure may assume various alternative orientations, except where expressly specified to the contrary. It is also to be understood that the specific devices and processes illustrated in the attached drawings, and described in the following specification are simply exemplary embodiments of the inventive concepts defined in the appended claims. Hence, specific dimensions and other physical characteristics relating to the embodiments disclosed herein are not to be considered as limiting, unless the claims expressly state otherwise.

The terms "including," "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element preceded by "comprises a ... " does not, without more constraints, preclude the existence of additional identical elements in the process, method, article, or apparatus that comprises the element.

Referring to FIGS. 1-6, reference numeral 10 generally designates a kitchen appliance, such as a food processing appliance with functionality related to, an ice cream maker, a bread maker, a mixer, a blender, a multifunctional food or beverage appliance, coffee or beverage appliances, and/or other food/beverage appliances. The kitchen appliance 10 includes a body 12 defining an accessory connection surface 14 with a sensor 16. The kitchen appliance 10 further includes a first appliance accessory 18A with a first readable module 20A and a second appliance accessory 18B with a second readable module 20B. A user interface 22 is located on the body 12 and includes a visual display 24 and a plurality of buttons 26 under the visual display 24 that are biased towards a user to provide haptic feedback. A control system 100 (e.g., a processor 104) is configured to receive a signal from the sensor 16 of the presence of the first readable module 20A or the second readable module 20B and identify which of the first appliance accessory 18A and the second appliance accessory 18B are attached to the accessory connection surface 14 by the signal. The control system 100 is further configured to generate a graphic on the visual display 24 specific to the identified appliance accessory 18A, 18B.

With continued reference to FIGS. 1-6, the combination of the buttons 26 being biased and the reconfigurable visual display 24 provide for an improved user experience that permits both reconfigurability for ease of use and desired haptic feedback during operation of the user interface 22. In some embodiments, readable inputs from the user interface 22 are a result of articulating the buttons 26 (e.g., overcoming the bias to move the buttons 26), touch sensors in the visual display 24, or a combination of both. In some embodiments, the user interface 22 (e.g., the visual display 24) may include regions with buttons 26 and regions without buttons 26. Readable inputs on the regions without buttons 26 may be via touch sensors while regions with buttons 26 may be via articulation of the buttons 26. In some embodiments, regions of the visual display 24 with buttons 26 may include a processing setting (i.e., identifiable by the generated graphic) that can be modified via touch sensors (e.g., a power setting) while articulation of the buttons 26 may be configured start a food processing cycle with the selected processing setting and/or power setting. In this manner, the generated graphic and readable inputs may both be modified based on the identified appliance accessories 18A, 18B or reconfiguration by a user's preference. While the figures only depict the first and second appliance accessories 18A, 18B, it should be appreciated that additional appliance accessories, other than the first and second appliance accessories 18A, 18B, may be received on the accessory connection surface 14 and be associated with different graphics and readable inputs. In addition, it should be appreciated that the control system 100 (e.g., the processor 104) may be configured to change what food processing methods are associated with the readable inputs. For example, an appliance accessory that dices food may have different food processing methods associated with readable inputs than an appliance accessory that heats and/or mixes food. The different food processing methods may be communicated to the user as differences in the generated graphics.

With reference now specifically to FIG. 1, the first and second appliance accessories 18A, 18B may each include a connection portion 28 (e.g., a threaded portion, a portion with one or more gaskets, and/or the like) that receives or is received by the connection surface 14 of the body 12. The kitchen appliance 10 includes a motor 30, and the control system 100 is operably connected to the motor 30 and the sensor 16. The motor 30 is configured to power a drive mechanism or output drive shaft 32, which, in turn, drives appliance tools 34A, 34B associated with the appliance accessories 18A, 18B. More particularly, the first appliance accessory 18A includes a first food appliance tool 34A and the second appliance accessory 18B includes a second food appliance tool 34B that is different than the first food appliance tool 34A in food processing methods (e.g., dicing, heating, mixing, etc.). It should be appreciated that the appliance tools 34A, 34B may be configured for other types of food processing methods besides cutting, for example, blending, heating, mixing, and/or other food processing methods.

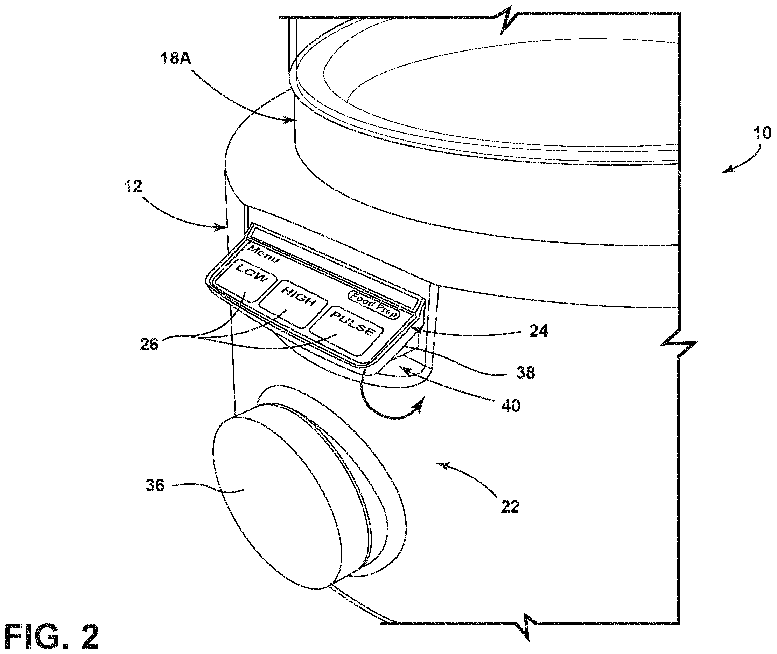

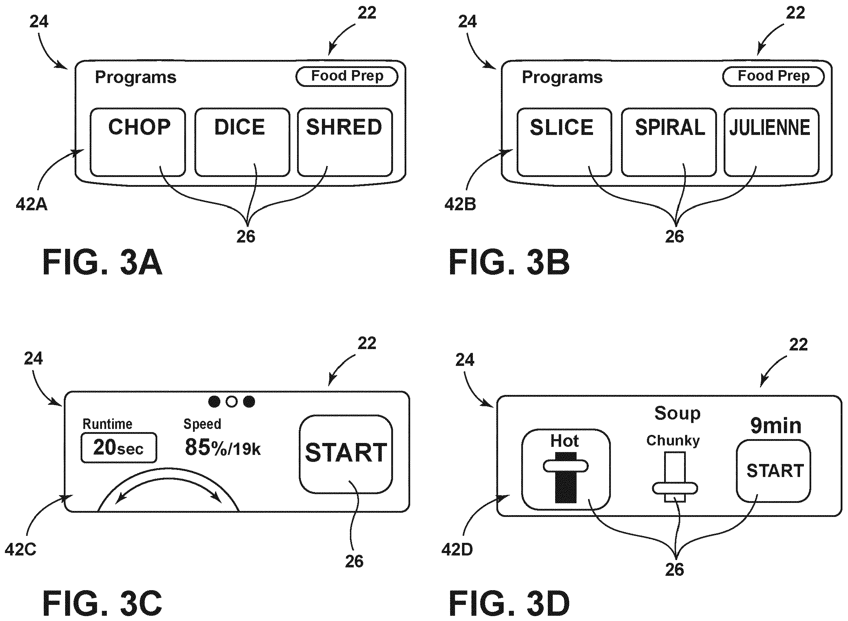

With reference now to FIG. 2, the user interface 22 may include one or more readable input components not associated with the buttons 26. For example, the user interface 22 may include additional buttons, toggles, and/or a dial 36 that selects different functions of the appliance accessories 18A, 18B, such as food processing methods, power settings, processing timers, and/or the like. In some embodiments, the dial 36 may be replicated on the visual display 24 (FIG. 3C). The visual display 24 and buttons 26 may be located on a toggle body 38 that is pivotally or otherwise moveably connected to the body 12 and articulates during use as indicated by the arrow. The toggle body 38 (e.g., including the visual display 24 and buttons 26) may be at least partially located within a recess 40 defined by the body 12 that at least partially protects the toggle body 38 (e.g., including the visual display 24 and buttons 26) and limits unintended articulation. The visual display 24 may utilize LCD, OLED, microLED, and/or plasma technology.

With reference now to FIGS. 3A-3D, the visual display 24 includes a variety of generated graphics, each including unique food processing options 42A-42D specifically related to the identified appliance accessories 18A, 18B. With reference now to FIG. 3A, the visual display 24 includes a generated graphic that includes a first set of food processing options 42A. The first set of food processing options 42A may be related to appliance tools 34A, 34B that are configured to cut food. More particularly, the first set of food processing options 42A may include options for types of cuts, for example, chopping, dicing, or shredding. With reference now to FIG. 3B, the visual display 24 includes a generated graphic that includes a second set of food processing options 42B. The second set of food processing options 42B may be related to appliance tools 34A, 34B that are configured to portion food into various shapes. More particularly, the second set of food processing options 42B may include options for forming slices, spirals, or julienne. With reference now to FIG. 3C, the visual display 24 includes a generated graphic that includes a third set of food processing options 42C. The third set of food processing options 42C may be related to appliance tools 34A, 34B that are configured to process food. More particularly, the third set of food processing options 42C may include options for runtime of processing (e.g., on a sliding scale), starting processing, and speed of processing (e.g., on a sliding scale). With reference now to FIG. 3D, the visual display 24 includes a generated graphic that includes a fourth set of food processing options 42D. The fourth set of food processing options 42D may be related to appliance tools 34A, 34B that are configured to heat food and make soup. More particularly, the fourth set of food processing options 42D may include options for the thickness of the soup (e.g., on a sliding scale), heating temperature (e.g., on a sliding scale), and starting processing.

With continued reference to FIGS. 3A-3D, it should be appreciated that two or more of the examples of food processing options 42A-42D may be available for the identified appliance accessories 18A, 18B. In other words, the visual display 24 may switch between food processing options 42A-42D specifically related to the identified appliance accessories 18A, 18B to save space and resources. With the food processing options 42A-42D having sliding scales, the sliding scale may be adjusted by the dial 36 and/or touch sensors on the visual display 24. The visual display 24 (and underlying buttons 26 between each option) depicted in FIGS. 3A-3D may be located on the toggle body 38 (FIG. 2) and/or may be an additional portion of the user interface 22 separate from the toggle body 38. In this manner, the kitchen appliance 10 may include more than one visual display 24 including a visual display on a toggle body 38 and a visual display located directly on the body 12.

With continued reference to FIGS. 3A-3D, it should be appreciated that more than one processing option 42A-42D may be available for a single appliance accessory 18A, 18B. For example, the processing options 42A-42B may be initially displayed, and selection of an option related to the type of cut or portion is made, the processing option 42C may be generated on the visual display 24. Generally speaking, different appliance accessories 18A, 18B may be configured for more than one type of processing. In this manner, once the appliance accessory 18A, 18B is identified, the control system 100 (e.g., the processor 104) may generate a menu with food processing options 42A-42D, that, once and option selected, the control system (e.g., the processor 104) may generate a second and different one of the food processing options 42A-42D. For example, the processing option 42D may be associated with an appliance accessory 18A, 18B that both warms and mixes, cuts, and/or blends. As such, the control system 100 (e.g., the processor 104) may generate a menu with food processing options 42A-42C, that, once and option selected related to speed, mixing, cutting, proportioning, the control system (e.g., the processor 104) may generate the food processing options 42D related to temperature and starting the food processing cycle (e.g., start). It should be appreciated that the processing options 42A-42D depicted in FIGS. 3A-3D are exemplary in nature and that other processing options or combinations of the processing options 42A-42D may be generated without departing from the scope of the subject disclosure. As a non-exclusive list, the processing options may relate to functions associated with making ice cream maker (e.g., cooling), bread, foods, beverages (e.g., coffee), and/or combinations thereof.

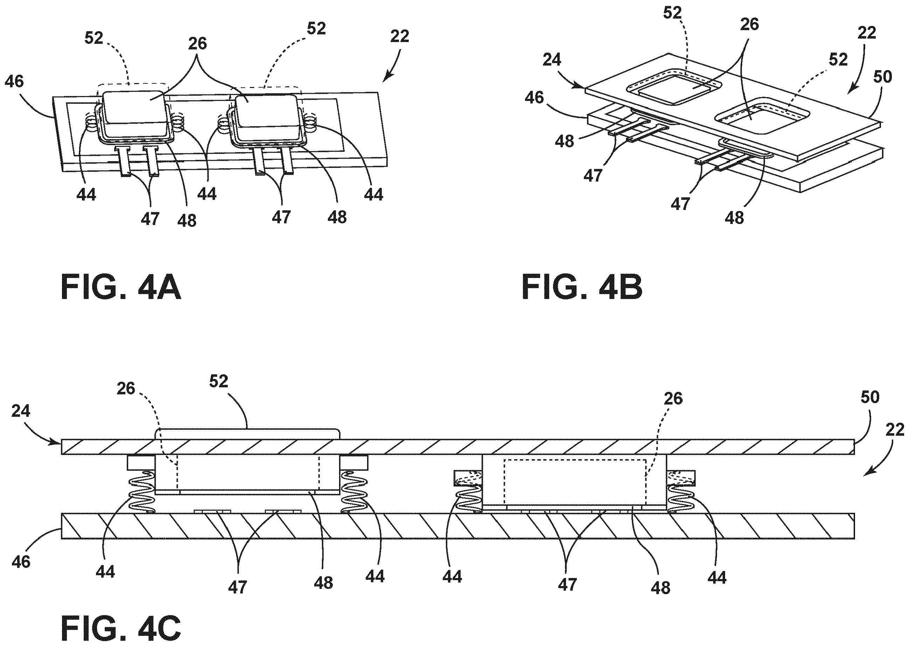

With reference now to FIGS. 4A-4C, the user interface 22 is illustrated as being isolated from the kitchen appliance 10. The buttons 26 are coextensive with the visual display 24 and are upwardly biased with at least one spring 44. More particularly, the spring 44 extends from an interface base 46 located under the visual display 24 to the buttons 26. A pair of traces 47 are aligned with each button 26, and each button 26 includes a conductive plate 48. Accordingly, pressing the buttons 26 in a downward motion brings the conductive plate 48 into contact with and closes the connection between the pair of traces 47 to create the readable input (FIG. 4C). As such, in addition to the pivotal connection of the toggle body 38, the buttons 26 provide further haptic feedback by way of the springs 44. It should be appreciated that the configuration in FIGS. 4A-4C may be located on the toggle body 38, elsewhere on the body 12 without pivotal movement, or a combination of both (e.g., in embodiments where the visual display 24 includes two or more visual displays 24 associated with haptic feedback). In some embodiments, the visual display 24 includes a display plate 50 (e.g., over two or more of the buttons 26) and/or a plurality of discrete display screens 52 over different ones of the button 26 (e.g., at least two, three, or each button 26). The generated graphic may be displayed on the display plate 50, the display screens 52, or both. In some embodiments, the visual display 24 includes only the display plate 50 and is at least partially flexible for accommodating movement of the underlying buttons 26 during articulation.

With reference now to FIGS. 3A-4C, the generated graphics on the visual display 24 may be limited to the buttons 26 (i.e., the discrete display screens 52), or the entire display plate 50. For example, looking at FIG. 3C, graphics related to runtime, speed, and dial 36 position may be generated on a combination of both the display plate 50 and the display screens 52, while the start option may be largely confined within the display screen 52 associated with one of the buttons 26. In this manner, in FIG. 3C only the start option may be selectable in the food processing options 42C. Further, in some embodiments, the generated food processing options 42A-42D may be associated with the toggle body 38 as user inputs. In other words, with reference again to FIG. 3C as an example, the start option may be selected by articulation of the toggle body 38 rather than selection of a specific button 26.

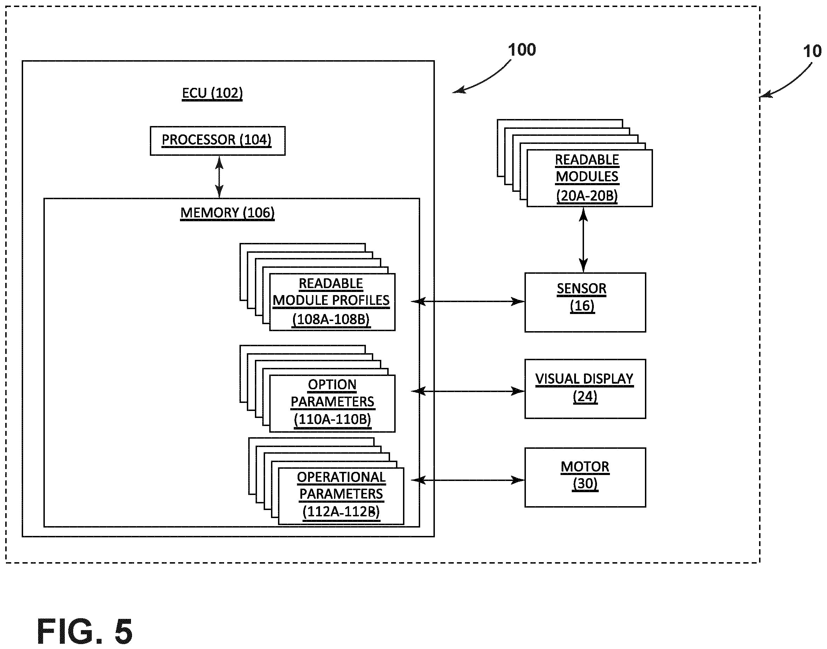

With reference now to FIG. 5, the control system 100 of the kitchen appliance 10 may include at least one electronic control unit (ECU) 102. The ECU 102 may include the processor 104 and a memory 106. The processor 104 may include any suitable processor 104. Additionally, or alternatively, each ECU 102 may include any suitable number of processors, in addition to or other than the processor 104. The memory 106 may comprise a single disk or a plurality of disks (e.g., hard drives) and includes a storage management module that manages one or more partitions within the memory 106. In some embodiments, memory 106 may include flash memory, semiconductor (solid state) memory, non-transitory storage medium, or the like. The memory 106 may include Random Access Memory (RAM), a Read-Only Memory (ROM), Electrically Erasable Programmable Read-Only Memory (EEPROM), or a combination thereof. The memory 106 may include instructions that, when executed by the processor 104, cause the processor 104 to, at least, perform the functions associated with the components of the kitchen appliance 10. The motor 30 may, therefore, be controlled by the control system 100 as dictated by the user interface 22 and the operational parameters. The memory 106 may include readable module profiles 108A, 108B associated with the readable modules 20A, 20B that can be implemented by the signal from the sensor 16. Each readable module profile 108A, 108B may further be associated with user option parameters 110A-110B that dictate which food processing options 42A-42D are generated on the visual display 24. Each readable module profile 108A, 108B may further be associated with user operational parameters 112A-112B that dictate functionality of the motor 30 and/or other components that facilitate food processing methods.

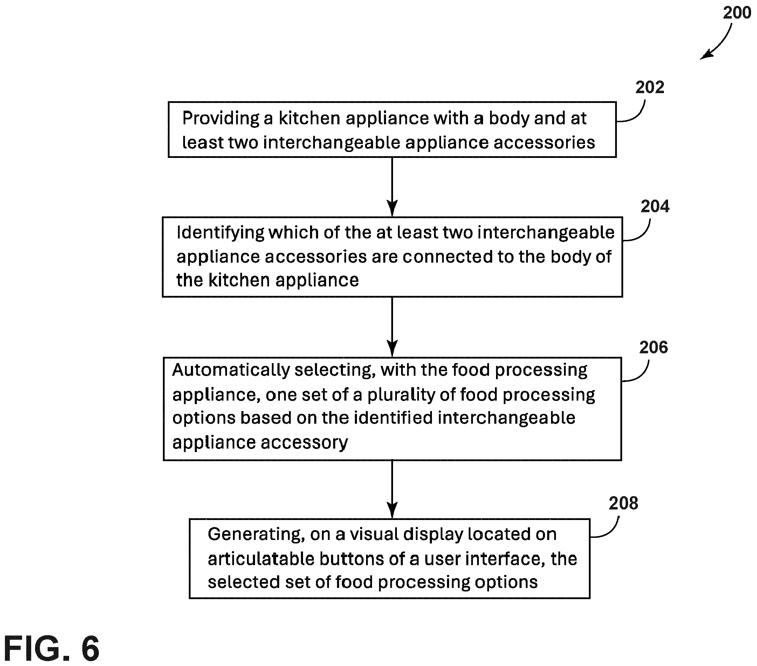

FIG. 6 a method 200 of configuring a visual display on a user interface with haptic feedback is illustrated. The method 200 may be performed by the control system 100. At step 202, the method 200 includes providing a kitchen appliance with a body, such as the kitchen appliance 10, and at least two interchangeable appliance accessories, such as the first appliance accessory 18A and the second appliance accessory 18B. At step 204, the method 200 includes identifying which of the at least two interchangeable appliance accessories are connected to the body of the kitchen appliance. At step 206, the method includes automatically selecting, with the food processing appliance, one set of a plurality of food processing options (e.g., such as food processing options 42A-42D) based on the identified interchangeable appliance accessory. At step 208, the method 200 includes generating, on a visual display (e.g., such as the visual display 24) located on articulatable buttons (e.g., such as buttons 26) of a user interface (e.g., such as the user interface 22), the selected set of food processing options.

The disclosure herein is further summarized in the following paragraphs and is further characterized by combinations of any and all of the various aspects described therein.

According to one aspect of the present disclosure, a kitchen appliance includes a body that defines an accessory connection surface with a sensor. The kitchen appliance further includes a first appliance accessory that includes a first readable module and a second appliance accessory with a second readable module. A user interface on the body includes a visual display and a plurality of buttons under the visual display that are biased towards a user to provide haptic feedback. A control system is configured to receive a signal from the sensor of the presence of the first readable module or the second readable module and identify which of the first appliance accessory and the second appliance accessory are attached to the accessory connection surface by the signal. The control system is further configured to generate a graphic on the visual display specific to the identified appliance accessory.

According to another aspect, buttons are biased towards a visual display by at least one spring.

According to yet another aspect, at least one spring includes a plurality of springs and each button is biased towards a visual display by a pair of springs.

According to still yet another aspect, pairs of traces that are aligned with each of a plurality of buttons.

According to yet another aspect, each of a plurality of buttons includes a conductive plate that moves in response to an articulation of the button into contact with one of a pair of traces.

According to yet another aspect, buttons are pivotally connected to a body to articulate during use and a visual display includes one or more regions that at least partially articulate with the buttons.

According to still another aspect, a user interface includes a dial and a control system is further configured to modify a generated graphic on a visual display as a result of movement of the dial.

According to another aspect of the present disclosure, a kitchen appliance includes a body defining an accessory connection surface with a sensor. A first appliance accessory includes a first readable module and a second appliance accessory includes a second readable module. A user interface is located on the body and includes a plurality of buttons that are biased towards a user to provide haptic feedback. A visual display located over at least one of the buttons. A control system is configured to receive a signal from the sensor of the presence of the first readable module or the second readable module and identify which of the first appliance accessory and the second appliance accessory are attached to the accessory connection surface by the signal. The control system is further configured to generate a graphic on the visual display specific to the identified appliance accessory.

According to another aspect, a visual display includes a display plate that is located over at least two buttons.

According to still another aspect, a visual display includes at least two discrete display screens, each discrete display screen located over a different one of at least two buttons.

According to still yet another aspect, a visual display at least partially articulates with the buttons.

According to another aspect, a plurality of buttons are biased towards a visual display by at least one spring.

According to still another aspect, at least one spring includes a plurality of springs and each button is biased towards a visual display by a pair of springs.

According to still yet another aspect, pairs of traces that are aligned with each of a plurality of buttons.

According to yet another aspect, each of a plurality of buttons includes a conductive plate that moves in response to an articulation of the button into contact with one of a pair of traces.

According to still yet another aspect, a user interface is located on a toggle body, the toggle body is pivotal between a non-active position and an articulated position.

According to another aspect, the articulated position is associated with a user input.

According to yet another aspect, a user interface is located on a toggle body, the toggle body is located in a recess.

According to still yet another aspect, a user interface includes a dial and a control system is further configured to modify a generated graphic on a visual display as a result of movement of the dial.

According to another aspect, a visual display includes a display plate that is located over at least two buttons.

According to yet another aspect, a visual display includes a display plate that is flexible.

According to still another aspect, a visual display includes at least two discrete display screens, each discrete display screen located over a different one of at least two buttons.

According to another aspect, discrete display screens at least partially articulates with buttons.

According to another aspect, a visual display at least partially articulates with buttons.

According to yet another aspect of the present disclosure, a kitchen appliance includes a body defining an accessory connection surface with a sensor. A first appliance accessory includes a first readable module and a second appliance accessory includes a second readable module. A toggle body is located on the body and pivotal between a non-active position and an articulated position associated with a user input. A user interface is located on the toggle body and includes a plurality of buttons that are biased towards a user to provide haptic feedback. A visual display located over at least one of the buttons. A control system is configured to receive a signal from the sensor of the presence of the first readable module or the second readable module and identify which of the first appliance accessory and the second appliance accessory are attached to the accessory connection surface by the signal. The control system is further configured to generate a graphic on the visual display specific to the identified appliance accessory.

According to another aspect, a plurality of buttons are biased towards a visual display by at least one spring.

For purposes of this disclosure, the term "coupled" (in all of its forms, couple, coupling, coupled, etc.) generally means the joining of two components (electrical or mechanical) directly or indirectly to one another. Such joining may be stationary in nature or movable in nature. Such joining may be achieved with the two components (electrical or mechanical) and any additional intermediate members being integrally formed as a single unitary body with one another or with the two components. Such joining may be permanent in nature or may be removable or releasable in nature unless otherwise stated.

## Claims

1. A kitchen appliance (10) comprising:
a body (12) defining an accessory connection surface (14) with a sensor (16);
a first appliance accessory (18A) with a first readable module (20A) and a second appliance accessory (18B) with a second readable module (20B);
a user interface (22) on the body (12) and including a visual display (24) and a plurality of buttons (26) under the visual display (24) that are biased towards a user to provide haptic feedback; and
a control system (100) configured to:
receive a signal from the sensor (16) of a presence of the first readable module (20A) or the second readable module (20B);
identify which of the first appliance accessory (18A) and the second appliance accessory (18B) are attached to the accessory connection surface (14) by the signal; and
generate a graphic on the visual display (24) specific to the identified appliance accessory (18A, 18B).

2. The kitchen appliance (10) of claim 1, wherein the plurality of buttons (26) are biased towards the visual display (24) by at least one spring (44).

3. The kitchen appliance (10) of claim 2, wherein the at least one spring (44) includes a plurality of springs (44) and each button (26) of the plurality of buttons (26) is biased towards the visual display (24) by a pair of springs (44).

4. The kitchen appliance (10) as in one of claims 1-3, further including pairs of traces (47) that are aligned with each of the plurality of buttons (26).

5. The kitchen appliance (10) of claim 4, wherein each button (26) of the plurality of buttons (26) includes a conductive plate (48) that moves in response to an articulation of each button (26) into contact with one of the pair of traces (47).

6. The kitchen appliance (10) of claim 1, wherein the plurality of buttons (26) are pivotally connected to the body (12) to articulate during use and the visual display (24) includes one or more regions that at least partially articulate with the plurality of buttons (26).

7. The kitchen appliance (10) as in claim 1 or 6, wherein the user interface (22) is located on a toggle body (38), the toggle body (38) pivotal is between a non-active position and an articulated position.

8. The kitchen appliance (10) of claim 7, wherein the articulated position is associated with a user input.

9. The kitchen appliance (10) of claim 7, wherein the toggle body (38) is at least partially located in a recess defined by the body (12).

10. The kitchen appliance (10) as in claim 1 or claim 5, wherein the user interface (22) includes a dial (36) and the control system (100) is further configured to:
modify the generated graphic on the visual display (24) as a result of movement of the dial (36).

11. The kitchen appliance (10) of claim 1, wherein the visual display (24) includes a display plate (50) that is located over at least two of the plurality of buttons (26).

12. The kitchen appliance (10) of claim 11, wherein the display plate (50) is flexible.

13. The kitchen appliance (10) of claim 1, wherein the visual display (24) includes at least two discrete display screens (52), each discrete display screen (52) located over a different one of the two buttons (26).

14. The kitchen appliance (10) of claim 13, wherein the discrete display screens (52) at least partially articulates with the at least one button (26).

15. The kitchen appliance (10) of claim 1, wherein the visual display (24) at least partially articulates with at least one of the plurality of buttons (26).
